# DEMANDE DE BREVET EUROPEEN

(11) **EP 1 382 482 A1**
(43) Date de publication de la demande: **21.01.2004**
(21) Numéro de dépôt: 02370032.1
(22) Date de dépôt: 18.07.2002
(51) Int. Cl.: B60N 3/04

(54) **Tapis de sol pour vèhicule automobile.**

(71) Demandeur: HV Developpement, SARL, 59117 Wervicq Sud (FR)
(72) Inventeur: Van Respaille, Hervé, 59910 Bondues (FR)
(74) Mandataire: Hennion, Jean-Claude

(57) **Abrégé**

Equipement d'habillage de véhicule, notamment tapis d'appoint, caractérisé en ce qu'il comprend une ganse périphérique pourvue, sur au moins deux bords latéraux du tapis et sur sa face inférieure, d'éléments auto-agrippant.

## Description

L'invention se rapporte au domaine technique des tapis de sol pour planchers de véhicules, notamment de véhicules automobiles.

Conventionnellement, les constructeurs automobiles recouvrent les planchers des véhicules d'éléments de moquette découpés et collés selon les dimensions et les reliefs de ces planchers.

Ce revêtement pose quelques problèmes pour son entretien, du fait que les éléments de tapis ne peuvent, le plus souvent, être démontés.

Par ailleurs, la moquette utilisée par les constructeurs sur les voitures de grande série est, souvent, de la moquette à poil ras, de qualité assez médiocre, dont la couleur n'est pas toujours en harmonie avec la couleur des housses des sièges, du capitonnage, voire de la carrosserie elle-même.

Pour pallier ces difficultés, et pour laisser aux propriétaires de voitures le choix d'agencer l'intérieur de leur véhicule comme ils l'entendent, certains fabricants d'accessoires mettent à la disposition des automobilistes des éléments de tapis amovibles, destinés à être placés sur les éléments de tapis d'origine.

Ainsi, il est de plus en plus courant d'habiller et protéger le plancher intérieur d'une automobile, au niveau du conducteur et des passagers, à l'aide de tapis de type moquette, en aiguilletés de polypropylène ou polyamides ou caoutchouc et PVC. En effet, ces derniers se sont substitués aux traditionnels tapis caoutchoutés pour leur confort et pour augmenter les qualités esthétiques de l'intérieur.

Des exemples de tapis pour aménagement de véhicules peuvent être trouvés dans les documents suivants :
- demandes de brevet français publiées sous les numéros 2 531 991, 2 535 277, 2 617 102, 2 641 747, 2 647 729, 2 672 019, 2 688 674, 2 688 742, 2 678 225, 2 690 115, 2 694 248, 2 708 533, 2 715 615, 2 754 222, 2 754 499, 2 772 321 ;
- brevets et modèles d'utilité allemands publiés sous les numéros 19814868, 4212502, 4142102, 4141023,
- demandes de brevet anglais publiées sous les numéros 2 118 035, 2 171 901, 2 171 902 ;
- demandes de brevet européen publiées sous les numéros 028 715, 057 391, 177 664, 112 795, 203 677, 247 677, 258 162, 259 795, 309 777, 311 736, 343 271, 379 630, 512 904, 518 014, 560 557, 594 925, 718 148, 776 761, 829 391, 834 423 ;
- brevets délivrés aux Etats-Unis sous les numéros 1 883 737, 2 505 554, 3 337 258, 4 068 339, 4 349 594, 4 382 986, 4 406 492, 4 481 240, 4 673 603, 4 721 641, 5 236 241 5 725 926 ;
- demandes internationales de brevet publiées sous les numéros 90/09906, 91/02665, 91/16218, 93/08040, 93/13254, 97/06029, 98/19880.

Les tapis d'appoint habillant l'intérieur de la caisse de véhicules automobiles, connus dans l'art antérieur, peuvent être rangés dans les quatre catégories suivantes :
- tapis brosse, à savoir structure textile enduite d'une résine synthétique sur sa face d'envers, la structure textile constituant la face d'endroit du tapis. Ce type de tapis est de conception ancienne (voir document BE 344 323 par exemple) ;
- moquette aiguilletée ou velours, par exemple morceaux de moquette en polypropylène, bordés d'un galon en fibre textile ;
- structure en résine synthétique moulée (élastomère, caoutchouc...), ce type de tapis étant également de conception très ancienne (cf. document FR 541 419 par exemple) ;
- structure en résine synthétique moulée sur laquelle est rapportée de la moquette, par collage.

Les tapis habillant l'intérieur de la caisse doivent présenter de nombreuses qualités :
- ils doivent être flexibles pour épouser les formes gauches du plancher, ces formes gauches étant liées notamment aux passages de roues, à la console centrale entre les sièges avant, au tunnel de transmission, aux zones repose-pied ;
- ils doivent pouvoir être employés sur des véhicules de marques et modèles différents, et ceci en dépit des différences de conformation en trois dimensions des planchers de ces véhicules. Cette possibilité d'emploi dans plusieurs types de véhicules n'est obtenue actuellement qu'au prix d'une réduction de la surface des tapis ;
- ils doivent présenter une grande résistance à l'usure par frottement et poinçonnement, notamment dans les zones d'appui du talon du conducteur. Ce poinçonnement est particulièrement marqué lorsque le conducteur est une femme portant des chaussures à talons ;
- ils doivent être esthétiques et aussi personnalisés que possible ;
- ils doivent présenter une rugosité de surface telle que le pied du conducteur ne puisse glisser de son point d'appui lorsqu'il est engagé sur une pédale, et cette rugosité (nervures, reliefs...) ne doit pas entraîner le dépôt de particules ou gravillons se comportant comme un matériau abrasif entraînant l'usure d'une partie de la chaussure du conducteur ;
- ils doivent être confortables, imputrescibles et faciles à nettoyer ;
- ils doivent pouvoir être présentés agréablement en linéaires de magasins, le consommateur pouvant faire facilement le choix du tapis correspondant à la fois au modèle de son véhicule et à ses goûts ;
- ils doivent employer des matériaux compatibles avec la réglementation et les normes constructeur (par exemple UPEC U3P3)
- ils ne doivent pas être onéreux.
- ils ne doivent pas laisser passer, entre eux et la garniture du plancher (en général une moquette collée) des fragments durs qui s'incrustent dans la sous-couche du tapis et altère le confort de l'utilisateur.

En plus des qualités mentionnées ci-dessus, les tapis habillant l'intérieur de la caisse doivent :
- pouvoir être facilement enlevés et ne pas être trop lourds, de sorte à être facilement secoués pour en chasser les graviers et particules de terre ou de sable qui sont amenés par les chaussures des utilisateurs du véhicule ;
- pouvoir être maintenus en position et ne pas glisser sur le plancher ou former des plis, en particulier lorsque le conducteur effectue une manoeuvre d'urgence (freinage).

Le maintien en position des tapis est d'une importance tout à fait particulière.

Si ce maintien n'est pas assuré, les problèmes suivants sont à craindre :
- gène du conducteur pour l'actionnement des pédales du frein ou d'accélérateur, pouvant aller jusqu'au blocage d'une ou plusieurs pédales de commande du véhicule ;
- passage, entre le tapis et la garniture de plancher, de fragments durs venant user prématurément ladite garniture lors du glissement répété du tapis.

Afin de maintenir en place le tapis d'appoint, plusieurs solutions techniques ont été envisagées dans l'art antérieur.

Une première solution consiste à prévoir à l'intérieur de l'habitacle du véhicule des systèmes de fixation du tapis. Il s'agit par exemple d'une ou plusieurs attaches pivotantes fixées sur le plancher du véhicule et qui sont prévues pour être passées chacune à travers un oeillet prévu dans le tapis.

Lorsque ces systèmes de fixation sont pré-installés par le constructeur du véhicule, le consommateur n'a pas la possibilité d'utiliser n'importe quel tapis du commerce, les systèmes de fixation de tapis étant propres à chaque constructeur, voire à tel ou tel modèle de véhicule. Le consommateur ne peut pas non plus conserver et réutiliser ses tapis lorsqu'il change de véhicule.

Lorsque ces systèmes de fixation sont vendus avec le tapis d'appoint, le propriétaire du véhicule doit percer le plancher du véhicule pour monter les systèmes de fixation. En règle générale, les propriétaires de véhicules sont totalement réticents à ce type d'intervention.

Une deuxième solution consiste à prévoir sur la face d'envers du tapis d'appoint, c'est à dire la face venant au contact du plancher du véhicule, des picots ou crampons permettant d'augmenter l'adhérence du tapis par rapport à la moquette du plancher.

Une troisième solution consiste à fixer le tapis d'appoint à l'aide de bandes auto-agrippantes ou d'adhésif double face rapportées sur la face envers du tapis.

Pour ces diverses solutions antérieures, on peut se référer, par exemple, aux documents suivants :
- brevets américains publiés sous les numéros 4 998 319, 5 003 664, 4 810 024, 4 588 628, 6 238 765, 4 804 567 ;
- demandes internationales de brevet publiées sous les numéros 01/34431, 97/06029, 97/16218 ;
- demandes de brevet européen publiées sous les numéros 560 557, 594 925, 177 664, 612 492, 899 154, 311 736, 211 966, 112 795 ;
- demandes de brevet français publiées sous les numéros 2 296 117, 2 489 134, 2 772 321, 2 677 590, 2 009 185.

Aucune des solutions antérieures pour fixer le tapis d'appoint ou surtapis ne s'est avérée pleinement satisfaisante.

La disposition de bandes auto-agrippantes nécessite en particulier une opération supplémentaire de fabrication. De plus, le positionnement précis des crochets de la bande male par rapport aux boucles de la bande femelle est difficile à obtenir, le consommateur devant s'y reprendre souvent à plusieurs reprises pour placer correctement le tapis pourvu de bandes type Velcro®.

La disposition d'adhésif double face conduit rapidement à un encrassement de l'adhésif, et à une perte de maintien du tapis.

Les surtapis vendus en seconde monte pourvus d'un envers granuleux ou d'une mousse se déforment à l'usage et surtout glissent sous les pédales en cas de mouvement brusque, entraînant des risques d'accident par exemple lors de freinage d'urgence.

La présente invention vise à fournir un tapis d'appoint ou surtapis, ou plus généralement un équipement d'habillage de véhicule ne présentant pas les inconvénients de ceux connus antérieurement, ce tapis étant à la fois amovible notamment pour son nettoyage et ne glissant pas lors de son utilisation.

A cette fin, l'invention se rapporte, selon un premier aspect, à un équipement d'habillage de véhicule, notamment tapis d'appoint, comprenant une ganse périphérique pourvue, sur au moins deux bords latéraux du tapis, et sur sa face inférieure, d'éléments auto-agrippant.

Dans une réalisation, la ganse est dépourvue d'éléments auto-agrippant sur sa face latérale et sur sa face supérieure.

Dans une autre réalisation, la ganse est pourvue d'éléments auto-agrippant tant sur sa face inférieure que sur sa face supérieure, le tapis étant ainsi réversible. Cette disposition est avantageuse lorsque notamment une face de tapis est usée ou de couleur différente de l'autre face, ou bien encore lorsque l'on souhaite fixer un élément supplémentaire sur la face supérieure du tapis, par exemple un film transparent ou une bande de renfort.

Dans une réalisation avantageuse, les éléments auto-agrippant sont en forme de crochets.

Les tapis de première monte étant le plus souvent constitués de moquette aiguilletée, de type plat ou bouclé, ou d'un tuft recouvrant le fond de caisse, les éléments auto-agrippant viendront directement s'agripper aux poils du tapis de sol.

La ganse peut être rapportée par soudage ou collage, ou bien encore par couture, de manière conventionnelle.

Dans une réalisation, la ganse est pourvue d'éléments auto-agrippant sur sensiblement toute sa longueur.

Le tapis selon l'invention conserve la flexibilité propre aux matériaux employés pour sa partie centrale dont le bord supporte la ganse.

Le tapis s'avère facile à enlever, par exemple pour nettoyage, tout en résistant fortement au glissement.

## Revendications

1. Equipement d'habillage de véhicule, notamment tapis d'appoint, **caractérisé en ce qu'**il comprend une ganse périphérique pourvue, sur au moins deux bords latéraux du tapis et sur sa face inférieure, d'éléments auto-agrippant.

2. Equipement d'habillage selon la revendication 1, **caractérisé en ce que** la ganse est dépourvue d'éléments auto-agrippant sur sa face latérale et sur sa face supérieure.

3. Equipement d'habillage selon la revendication 1 ou 2, **caractérisé en ce que** les éléments auto-agrippant sont en forme de crochets.

4. Equipement d'habillage selon l'une quelconque des revendications 1 à 3, **caractérisé en ce que** la ganse est rapportée par couture, soudage ou collage.

5. Equipement d'habillage selon l'une quelconque des revendications 1 à 4, **caractérisé en ce que** la ganse est pourvue d'éléments auto-agrippant sur sensiblement toute sa longueur.
